(19) Europäisches Patentamt
European Patent Office
Office européen des brevets

(11) **EP 3 491 287 B1**

(12) **EUROPEAN PATENT SPECIFICATION**

(45) Date of publication and mention
of the grant of the patent:
**24.06.2026   Bulletin 2026/26**

(21) Application number: **17745460.0**

(22) Date of filing: **18.07.2017**

(51) International Patent Classification (IPC):
*F21V 7/00* *(2006.01)*      *G02B 19/00* *(2006.01)*
*F21V 5/00* *(2018.01)*      *F21V 13/04* *(2006.01)*

(52) Cooperative Patent Classification (CPC):
**G02B 19/0028; F21V 5/00; F21V 5/04;
F21V 7/0091; G02B 19/0061**

(86) International application number:
**PCT/GB2017/052111**

(87) International publication number:
**WO 2018/020218 (01.02.2018 Gazette 2018/05)**

(54) **OPTICAL ILLUMINATOR**

OPTISCHE BELEUCHTUNGSVORRICHTUNG

ILLUMINATEUR OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **26.07.2016   GB 201612921**

(43) Date of publication of application:
**05.06.2019   Bulletin 2019/23**

(73) Proprietor: **University Court of Glasgow
Caledonian University
Glasgow G4 OBA (GB)**

(72) Inventors:
• **RAMIREZ-INIGUEZ, Roberto
Glasgow G4 0BA (GB)**
• **BABADI, Sina
Sheffield S11 8YU (GB)**
• **BOUTALEB, Tuleen
Glasgow G4 0BA (GB)**

(74) Representative: **Marks & Clerk LLP
15 Fetter Lane
London EC4A 1BW (GB)**

(56) References cited:
**EP-A1- 2 538 260      WO-A1-2011/076214
US-B1- 7 580 192**

**Description**

**Field of the Invention**

The present invention relates to an optical element, such as an optical element for improving the uniformity of illumination of a target by a light source, which, optionally but not essentially, may be used to improve the uniformity of illumination of a street by a street light system. The present invention also relates to associated methods of generating and producing an optical control element and/or a uniform light source comprising the optical element.

**Background to the Invention**

Optical elements for uniform illumination may be utilised in a variety of applications, but are particularly useful in street lighting systems, such as street lighting systems using light emitting diodes (LEDs) as sources of optical radiation.

LEDs are a preferred light source for street lighting systems because of longer lifetimes, lower energy consumption, and shorter response times, compared to other light sources. LEDs can also emit any colour of light. However, LEDs tend to have wide angular emissions that may fail to meet international standard requirements for street lighting systems. For example, European Union standards require illumination from a street light vary no more than 5% across the illuminated area.

Dielectric total internal reflection concentrators (DTIRCs) use a front surface that may be curved, and totally internally reflecting sidewalls, to concentrate optical radiation incident on the front surface onto a back surface. The optical radiation may be uniformly incident on the front surface, but not uniformly concentrated on the back surface. A dielectric total internal reflection concentrator used in reverse to redirect optical radiation emitted from a light source will therefore not provide uniform illumination.

Freeform lenses can be used to provide uniform illumination from a light source. However, their emission is modified by a single surface, and so there is only 1 degree of freedom in their design. Freeform lenses require significant space around the light source to correctly modify the light emission to provide uniform illumination. Freeform lenses cannot therefore be placed closely together, as neighbouring lenses would shadow each other.

It is at least one objective of one embodiment of the present invention to provide an improved optical element, such as an improved optical element for providing uniform illumination. Relevant prior art is WO 2011/076214.

**Summary of Invention**

The invention is defined by the appended claims. According to a first aspect of the present invention is an optical element comprising a side structure, the optical element being configured such that optical radiation passing through the optical element comprises a first portion of optical radiation which is not incident on the side structure of the optical element, and a second portion of optical radiation which is incident on the side structure of the optical element, such that optical radiation emitted from the optical element is incident on a target area and comprises the first and second portions of optical radiation; wherein the optical element is configured such that at least part or all of the first and second portions of optical radiation received at the target area have or result in complementary intensity profiles in the target area and/or balance each other and/or have mutually inverse intensity profiles and/or combine and/or correlate in the target area, e.g. such that the optical radiation emitted from the optical element substantially uniformly illuminates the target area.

The optical element may further comprise a first surface and a second surface. The first and second surfaces may be connected together via the side structure of the optical element. The first surface may be an input surface. Optical radiation may enter the optical element through the first surface. The second surface may be an output surface. Optical radiation may be emitted from the optical element through the second surface. The first and second surfaces may comprise faces or surfaces of the optical element that are configured to accept light into or emit light from the optical element.

The first portion of the optical radiation may be or comprise radiation that passes directly from the first surface to the second surface. The second portion of the optical radiation may be redirected, e.g. reflected, such as internally reflected, preferably totally internally reflected, by the side structure.

The side structure may have an internally reflecting profile, preferably a totally internally reflecting profile, such that optical radiation that enters the optical element from the first surface and is subsequently incident on the side structure at an angle greater than an acceptance or critical angle (with respect to the normal) is internally reflected by the side structure to and/or towards the second surface. The portion of the optical radiation that enters the optical element from the first surface and is internally reflected by the side structure to or towards the second surface may be, comprise or be comprised in the second portion of the optical radiation.

The side structure (e.g. the internally reflecting profile of the side wall structure) may be configured or shaped such that the second portion of the optical radiation at least partially or wholly has a complementary intensity profile to and/or balances with and/or has at least a partially inverse intensity profile and/or combines and/or correlates to the first portion of the optical radiation.

The shape of the side structure may be determined by ray tracing, e.g. using Zemax™ or Matlab or other suitable software package .

The side structure may comprise a side wall structure of the optical element and/or an interface between the optical element, e.g. the sides of the optical element, and the environment surrounding the optical element, which may be or comprise air, water or other liquids or gasses or the like.

The optical element may be, for example, an optical beam control element for uniform illumination. The optical element may be a first or secondary optical element.

The illumination of the target area may be at least 80% uniform, preferably at least 90% uniform, more preferably at least 95% uniform.

The target area may be planar. The target area may be a polygon, regular polygon, square, rectangular, circular, elliptic, oval, or the like. The target area may be a fixed distance from the optical element. The target area may be from 0.5 metres to 30 metres, e.g. from 1 metre to 10 metres from the optical element, preferably 3 metres to 8 metres from the optical element, more preferably 4 metres to 7 metres from the optical element.

The optical element may be a solid optical element. The optical element may be formed from a material which is substantially transparent to optical radiation, which may be a dielectric material, such as polycarbonate, acrylic, or glass. At least one material property of the optical element, e.g. the refractive index of the optical element, may be selected or defined , e.g. along with the shape of the internally reflecting profile of the side structure, such that optical radiation that enters the optical element from the first surface and is subsequently incident on the side wall structure at an angle less than or equal to the acceptance or critical angle is internally reflected by the side wall structure to the second surface.

Preferably the optical radiation is radiation from the visible spectrum. However, alternatively or additionally, the optical radiation may comprise radiation from other parts of the spectrum, such as infra-red radiation or ultraviolet radiation.

The second surface may be configured such that the first portion of the optical radiation passing through the optical element may be refracted by the second surface. The second surface may be configured such that the second portion of the optical radiation passing through the optical element may be refracted by the second surface after being totally internally reflected by the totally internally reflecting profile of the side structure.

The first portion of the optical radiation which may be emitted from the optical element through the second surface may illuminate the target area non-uniformly. The second portion of the optical radiation which may be emitted from the optical element through the second surface may illuminate the target area non-uniformly. The combination of the first and second portions of the optical radiation which may be emitted from the optical element through the second surface may illuminate the target area substantially uniformly.

The totally internally reflecting profile of the side structure may direct the second portion of the optical radiation towards the second surface such that the second portion of the optical radiation which is emitted from the optical element compensates for the non-uniformity of the first portion of the optical radiation illuminating the target area.

The first surface may be planar. The first surface may comprise a nonplanar surface, such as a curved surface, which may be or comprise be or comprise a semi-hemispherical surface. The first surface may be concave. The first surface may define a recess, e.g. for receiving a light source. The optical element may be configured such that optical radiation entering the optical element is not refracted at the first surface.

Optical radiation entering the optical element may be from a light source, preferably comprising one or more LEDs. The light source may be a point source. An LED may be considered as a point source. The light source may be proximate, adjacent, coupled to or in contact with the optical element. At least some or all of the optical radiation emitted from the light source may be incident on the optical element, preferably on the first surface. At least part, such as a light emitting part, of all of the light source may be provided in the recess formed by the first surface of the optical element.

The second surface of the optical element may be curved. The second surface of the optical element may be or comprise a spherical section, such as a semi-hemisphere. The curvature of the second surface may be a section of a circle or a hyperbolic or parabolic section. The second surface may be convex or lenticular.

The optical element may be configured such that at least some or all of the optical radiation emitted from the optical element may be emitted through the second surface. The first and second portions of optical radiation passing through the optical element may be refracted at the second surface. The optical element may be configured such that substantially no optical radiation is emitted through the side structure of the optical element.

The optical element may be rotationally symmetric, e.g. around the optic or long or z axis of the optical element.

Cross-sections of the optical element perpendicular to, and/or distributed along, the optical axis of the optical element may be any suitable shape, such as a polygon, regular polygon, square, rectangular, circular, elliptic, oval, or the like. The cross-sections of the optical element perpendicular to, and/or distributed along, the optical axis of the optical element may change in size but not shape along the optical axis of the optical element. The shape of the cross-sections of the optical element perpendicular to, and/or distributed along, the optical axis of the optical element may be the same shape as the target area.

According to a second aspect of the present invention there is a method of producing or designing an optical element, the optical element comprising a side structure, such that optical radiation passing through the optical element comprises a first portion of optical radiation which is not incident on the side structure of the optical element, and a second portion of optical radiation which is incident on the side structure of the optical element, such that optical radiation emitted from the optical element comprises the first and second portions of optical radiation.

The method may comprise:

determining illumination of a target area by the first portion of optical radiation, and

configuring the side structure such that at least part or all of the second portion of optical radiation is redirected by the side structure to or towards the second surface, e.g. such that at least part or all of the first and second portions of optical radiation received at the target area have complementary intensity profiles and/or balance each other and/or have mutually inverse intensity profiles and/or combine and/or correlate, e.g. so that the first and second portions of optical radiation in combination substantially uniformly illuminate the target area.

The optical element may be or comprise an optical element according to the first aspect.

Uniform illumination of the target area may be a boundary condition for the method of designing the optical element. The boundary condition may be illumination of the target area to be at least 80% uniform, preferably at least 90% uniform, more preferably at least 95% uniform.

The method may comprise configuring, determining or choosing a first surface and a second surface. The first surface and second surface may be connected together via the side structure of the optical element. Optical radiation may enter the optical element through the first surface and may be emitted from the optical element through the second surface. The first surface may be shaped and sized such that optical radiation entering the optical element does so through the first surface, preferably without being refracted at the first surface. The second surface may be shaped and sized to provide the illumination of the target area by the first portion of optical radiation. The first and second surfaces may comprise faces or surfaces of the optical element that are configured to accept light into or emit light from the optical element.

The method may comprise determining or choosing a refractive index n of the material of the optical element.

The method may comprise determining or choosing a distribution of optical radiation which enters the optical element. The optical radiation may be emitted from a light source, which may have a known emission profile, such as an LED. The light source may be a point source, possibly isotropic. The light source may be an LED which is approximated as a point source. The light source may be provided on the optical axis of the optical element.

The method may comprise determining or choosing an angle $\theta$ that defines the outer extremes of the first portion of the optical radiation which passes through the optical element, as measured from the optical axis of the optical element. The angle $\theta$ may be an angle at the light source (or a point on the first surface that optical radiation enters the optical element) from the optical axis to a junction between the second surface and the side structure. The first portion of the optical radiation that passes through the optical element may comprise optical radiation emitted from the light source (or admitted into the optical element) with an angle of 0 to $\pm\theta$ degrees, measured from the optical axis of the optical element.

The method may comprise determining or choosing an angle $\phi$, which defines the outer extremes of the second portion of the optical radiation that passes through the optical element, measured from the optical axis of the optical element. The second portion of the optical radiation that passes through the optical element may comprise optical radiation emitted from the light source with an angle of $\theta$ to $\phi$ degrees and/or from $-\theta$ to $-\phi$ degrees, measured from the longitudinal axis of the optical element. The angle $\phi$ may correspond to the acceptance or critical angle of the side structure, i.e. optical radiation incident on the side structure of the optical element at an angle less than the angle $\phi$ (e.g. between the angles $\theta$ and $\phi$) may be internally reflected from the side structure, e.g. to or towards the second surface. In other words, the angle $\phi$ may be the angle (at the light source or a point on the first surface that optical radiation enters the optical element) from the optical axis to a point on the side structure that represents the critical or acceptance angle, i.e. the boundary of where optical radiation incident on the side structure is or is not internally reflected by the side structure..

The method may comprise determining or choosing the height h of the optical element. The height of the optical element may be the length of the optical element along the optical axis of the optical element.

The method may comprise determining or choosing a target area. The target area may be planar. The target area may be a polygon, regular polygon, square, rectangular, circular, elliptic, oval, or the like. The target area may be a fixed distance from the optical element. The target area may be 0.5 metres to 30 metres, e.g. 1 metre to 10 metres from the optical element, preferably 3 metres to 8 metres from the optical element, more preferably 4 metres to 7 metres from the optical element.

The method may comprise determining or choosing a number of divisions for the second portion of the optical radiation which passes through the optical element. The divisions may have equal solid angles.

The method may comprise determining or choosing a second surface. The second surface may be curved, preferable a spherical section such as a semi-hemisphere. The curvature of the second surface may be a section of a circle or a hyperbolic or parabolic section. The second surface may be convex or lenticular. The second surface may be a spherical section, such as a semi-hemisphere, defined by a radius R.

The method may comprise calculating an angle $\alpha$, the angle between optical radiation passing through the optical element at an angle $\theta$ to the optical axis of the optical element, and the surface normal of the second surface at the point at which optical radiation passing through the optical element at an angle $\theta$ to the optical axis of the optical element is incident on the second surface.

The method may comprise calculating an angle $\beta$, the angle between optical radiation refracted at the second surface which passes through the optical element at an angle $\theta$ to the optical axis of the optical element, and the surface normal of the second surface at the point at which optical radiation passing through the optical element at an angle $\theta$ to the optical axis of the optical element is incident on the second surface.

The method may comprise determining the point M, the point at which optical radiation passing through the optical element at an angle $\theta$ to the optical axis of the optical element is incident on the second surface. The point M may be an intersection of the second surface of the optical element and the optical radiation passing through the optical element at an angle $\theta$ to the longitudinal axis of the optical element (e.g. in a cross section of the optical element). The point M may be a junction between the second surface and the side structure (e.g. in a cross section of the optical element).

It will be appreciated that the properties and variables of the optical element may be determined using ray tracing, or other techniques that would be readily apparent to the skilled person in the field of optics.

The method may comprise a starting configuration for the optical element defined by one or more or each of: the index of refraction n of the material forming with optical element, $\theta$, $\phi$, h, R, L (a distance along the z-axis from an origin of a curve or circle that defines the cross section of the second surface to the light source), the shape and/or size of the first surface, the shape and/or size of the target area, and the distribution of optical radiation that enters the optical element. The method may comprise determining the illumination of the target area by the first portion of optical radiation that passes through the optical element, e.g. using the starting configuration.

The method may comprise determining the illumination of the target area by the second portion of optical radiation that passes through the optical element that is complimentary to the corresponding illumination of the target area by the first portion of the optical radiation. The method may comprise determining the illumination of the target area by the second portion of optical radiation that passes through the optical element required such that the target area is uniformly illuminated by the combination of the first and second portions of optical radiation.

The method may comprise configuring and/or shaping the second surface so as to provide the determined illumination of the target area by the second portion of the radiation.

The method may comprise dividing the second portion of the optical radiation and/or angular portions of the optical element into N divisions. The method may comprise dividing the angular range $\theta$ to $\phi$ into N divisions. The N divisions may be or comprise N equal divisions. The method may determine where the optical radiation of each division should be incident on the target area. The method may comprise determining the configuration of the side wall structure that reflects the optical radiation of each division of the second portion of the optical radiation to be incident in an associated desired location of the target area. The method may comprise the side structure being determined, e.g. point-by-point, by considering the optical radiation of each division in turn. The profile of the side structure may be iteratively changed, e.g. for each division, until the illumination of the target area by the second portion of optical radiation that passes through the optical element is complimentary to the corresponding illumination of the target area by the first portion of the optical radiation. The profile of the side structure may be iteratively changed, e.g. for each division, until the target area is substantially uniformly illuminated by the combination of the first and second portions of the optical radiation. Each division may be of equal size and/or may be selected by a designer, e.g. based on a desired resolution.

The method may involve ray tracing or some other suitable optical technique that would be apparent to a skilled person from the teaching of the present application.

The method may comprise determining the side structure of the optical element, e.g. at least one side of the side structure, in 2D, and rotating the determined structure of the optical element, e.g. by 360°, around the optical axis of the optical element, to provide a 3D structure.

The method of determining the side structure may comprise energy mapping. The energy mapping may be such that illumination of the target area by the second portion of optical radiation that passes through the optical element is complimentary to the corresponding illumination of the target area by the first portion of the optical radiation. The energy mapping may be such that the distribution of optical radiation that enters the optical element illuminates the target area uniformly.

According to a third aspect of the present invention is an optical element designed using the method according to the second aspect of the invention. The optical element may be an optical element according to the first aspect.

According to a fourth aspect of the present invention is an illumination system, comprising a light source and an optical element according to the first aspect of the invention.

The light source may be provided at, adjacent, in contact or proximate the first surface of the optical element. The light source may be positioned such that the first surface of the optical element receives at least part or all of the light emitted by the light source. The light source may be a point light source. The light source may be or comprise an LED, e.g. an LED light source. The light source may be provided on the optical axis and/or a rotational axis of the optical element. The light source may be provided in a cavity or recess in a first surface of the optical element.

According to a fifth aspect of the present invention is a computer file, comprising a design for an optical element according to the first or third aspects of the present invention. The design may be encoded in instructions for operating a fabrication apparatus, such as a 3D printer. The computer file may be configured such that, when loaded onto a suitable fabrication apparatus, such as a 3D printer, the computer file causes or facilitates the production of an optical element according to the first or third aspects. The computer file may be instantiated on a carrier medium, which may be a tangible carrier medium, such as a memory, flash memory, optical and/or magnetic recording medium or disks, RAM, ROM, and/or the like. The carrier medium may be an intangible carrier medium, such as an electronic or electromagnetic signal and/or the like. The computer file may be transient or intransient.

According to a sixth aspect of the present invention is a computer program product that is configured such that, when loaded and processed by a suitable processing apparatus, causes the processing apparatus to implement or perform the method of the second aspect.

Features analogous to those described in relation to any of the aspects of invention may also be applicable to any of the other aspects of invention.

Advantages of these embodiments are set out hereafter, and further details and features of each of these embodiments are defined in the accompanying dependent claims and elsewhere in the following detailed description.

## Brief Description of the Drawings

At least one embodiment of the invention will now be described, by way of example only, with reference to the accompanying drawings, in which:

Figures 1(a) and 1(b) are cross sections of a dielectric totally internally reflecting concentrator;

Figures 2(a) and 2(b) show the illumination of a target plane 6m from a dielectric totally internally reflecting concentrator of Figure 1(b) when used with a point light source;

Figures 3(a) and 3(b) show schematic illustrations of the variables used in a method of designing an optical element according to the invention;

Figure 4 shows a schematic of optical radiation passing through an optical element according to the invention;

Figure 5 shows a schematic of the second portion of the optical radiation passing through an optical element divided into equal divisions and redirected via the side structure to the target area according to a method of the invention;

Figure 6 shows a method of generating an optical element;

Figures 7(a) and 7(b) show a distribution of the first portion of optical radiation passing through the optical element of Figure 4 on the target area;

Figures 8(a) to 8(b) show a distribution of the second portion of optical radiation passing through the optical element of Figure 4 on the target area; and

Figures 9(a) to 9(b) show a combined distribution of the first and second portions of optical radiation passing through the optical element of Figure 4 on the target area.

## Detailed Description of Preferred Embodiments

Throughout the following description, identical reference numerals will be used to identify like parts.

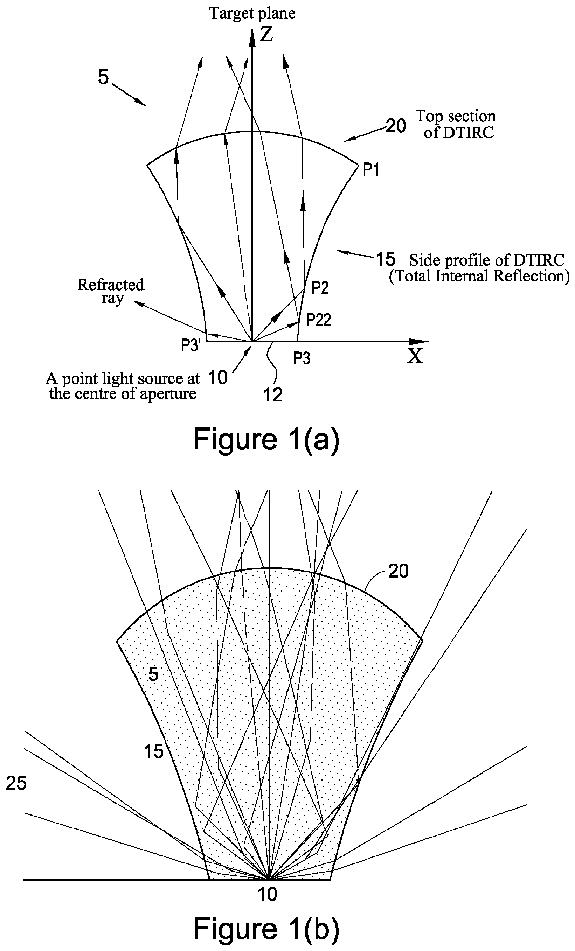

Figure 1(a) shows a schematic cross section of a dielectric totally internally reflecting concentrator 5 being used to redirect emission from a point light source 10 provided at the centre of a first (input) surface 12 of the concentrator 5. In this way, the light emitted by the light source 10 is admitted into the concentrator 5 via the first surface 12. Optical rays P3' emitted from the light source at high angles (i.e. out with an acceptance or critical angle) are refracted out of the concentrator 5 from a side structure 15 of the dielectric totally internally reflecting concentrator 5 and are not directed towards the target area. The side structure 15 of the dielectric totally internally reflecting concentrator 5 is designed as a totally internally reflecting side profile for parallel optical radiation incident on the top section 20 of the dielectric totally internally reflecting concentrator 5, and are not designed to redirect light from a light source 10 that is emitted in many directions.

Figure 1(b) shows a schematic cross section of dielectric totally internally reflecting concentrator 5 shown in Figure 1(a) being used to redirect emission from the point light source 10. Optical radiation 25 emitted from the light source 10 that is incident on the side structure 15 at high angles (i.e. outwith the acceptance / critical angle) is refracted out from the optical concentrator 5 from the side structure 15 and thereby emitted from the dielectric totally internally reflecting concentrator 5. The remaining optical radiation is emitted from the top section 20 of the dielectric totally internally reflecting concentrator 5.

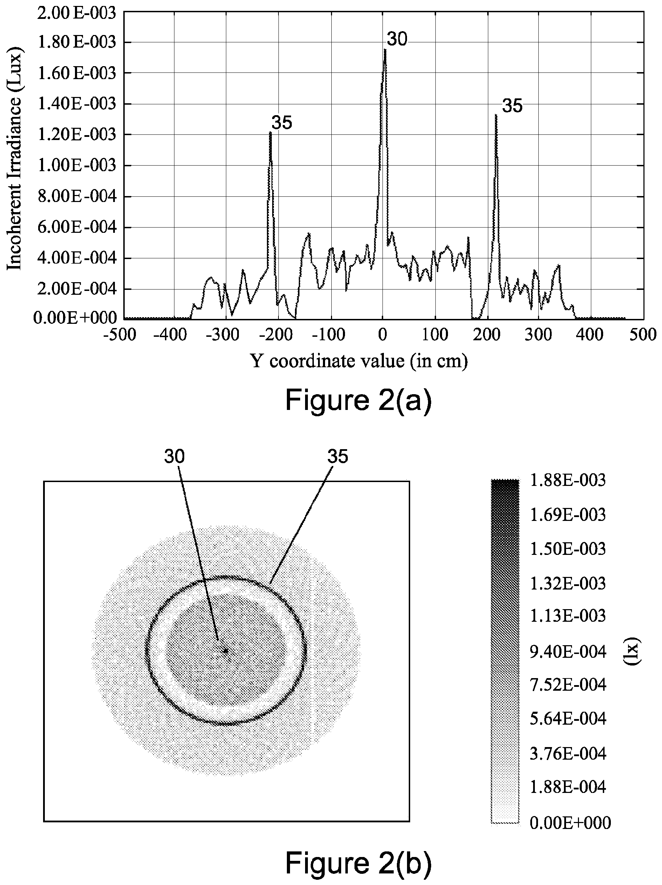

Figures 2(a) and 2(b) show the illumination of a target plane 6 m from a dielectric totally internally reflecting concentrator of Figure 1(b) when used with the point light source 10. The illumination is highly non-uniform, with a much greater intensity of optical radiation at the centre 30 of the target area and in a ring 35 around the centre 30 than at other portions of the target area.

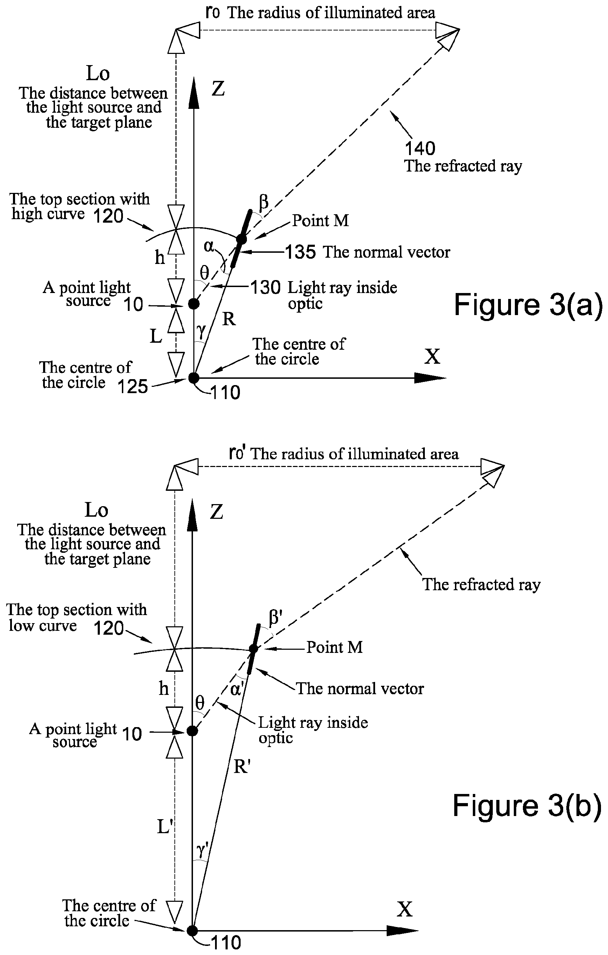

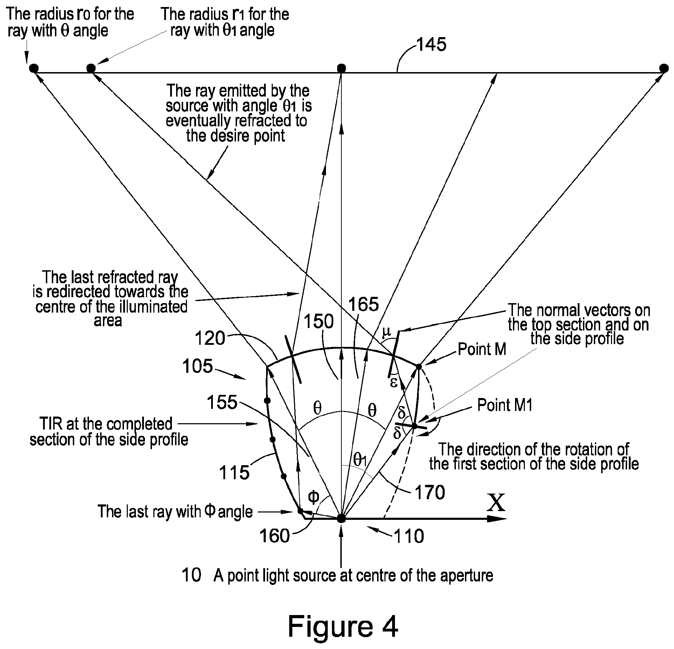

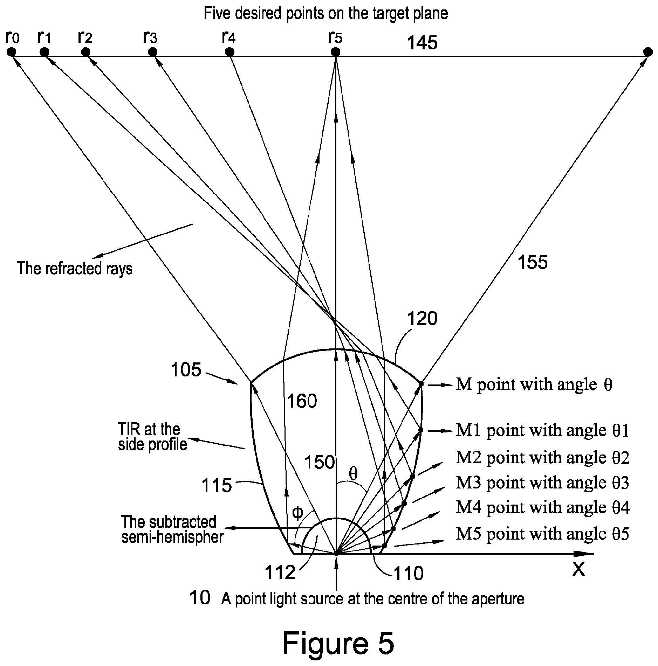

Figure 3(a) shows a geometry for use in a method of designing optical elements 105, such as those shown in Figures 4 and 5. A cross section of the second surface 120, preferably in the form of a semi-hemisphere, is defined by a radius R. The centre of a circle 125, part of which describes a cross sectional profile of the semi-hemisphere of the second surface 120, is located at the origin of a Cartesian coordinates system, where the z-axis passes through the centre of the second surface 120 and is directed along the optical axis of the optical element. The x-axis and the y-axis (not shown) are orthogonal to each other and to the z-axis. The centre of the circle 125 that describes the cross section of the semi-hemisphere of the second surface 120 is defined using Cartesian coordinates by the equation:

$$x^2 + z^2 = R^2$$

A height h of the optical element is selected. A light source 10, preferably a point light source, is placed at the centre of a first (input) surface 110 (see e.g. Figure 4) of the optical element 105 (see Figure 4), on the optical axis / z-axis of the optical element, a distance h from the top of the second surface 120. The light source 10 is a distance L along the z-axis from the origin of the Cartesian coordinates system (which is at the centre of the circle that defines the cross section of the second surface 120).

A first portion of optical radiation from the light source 10 that passes through the optical element 105 directly from the first surface 110 to the second surface 120 is emitted from the light source 10 within an angular range from 0 to an angle $\pm\theta$ from the optical axis or z-axis. The angle $\theta$ is the largest angle from the z-axis for which optical radiation emitted from the light source 10, preferably a light ray 130 inside the optical element, will be incident on the second surface 120. In other words, the angle $\theta$ defines an angle with respect to the light source from the z-axis or optical axis to the junction of the second surface with a side structure 115 of the optical element 105. The angle $\theta$ determines the extent to which the second surface 120 extends from the z-axis.

A point M is the point at which optical radiation 130 emitted from the light source 10 at an angle $\theta$ and the second surface 120 intersect, i.e. the point M corresponds to the junction of the second surface 120 and the side structure 115.

The Cartesian coordinates (x, z) of the point M can be found using the equation:

$$z = \tan(90 - \theta) \times x + L$$

where x and z are related by the equation:

$$x^2 + z^2 = R^2.$$

An angle $\gamma$ is the angle at the origin of the Cartesian coordinates system between the z-axis and the point M. The angle $\gamma$ can be found using the x and z Cartesian coordinates of the point M and the equation:

$$\gamma = \arctan\left(\frac{x}{z}\right)$$

The angle of incidence $\alpha$ is the angle between the normal vector 135 at the point M and optical radiation 130 emitted from the light source 10 at an angle $\theta$. The angle of incidence $\alpha$ can be found using the equation:

$$\alpha = \theta - \gamma$$

The angle of refraction $\beta$ is the angle between the normal vector 135 at the point M and a refracted ray 140 refracted at point M. The angle of refraction $\beta$ can be found using Snell's law of refraction, which is:

$$n_1 \sin \alpha = n_2 \sin \beta$$

where $n_1$ and $n_2$ are the refractive index of the material of the optical element 105 and air (i.e. the material forming the environment around the optical element 105), respectively. Although the following analysis is based on the optical element 105 being surrounded by air, it will be appreciated that the optical element 105 could be surrounded by other materials having a different index of refraction. In this case, it would be a straightforward task to modify the following analysis for different values of $n_2$. However, when the material surrounding the optical element 105 is air, the refractive index of air can be approximated as being equal to 1, and so the angle of refraction $\beta$ can be found using the equation:

$$\beta = \arcsin(n_1 \sin \alpha)$$

The target area, e.g. the illuminated area, is defined by the fixed distance $L_0$ from the second surface 120 of the optical element to the target plane, and the size of the target area (e.g. the radius of the illuminated area $r_0$). The radius of the illuminated area $r_0$ can be found using the equation:

$$r_0 = \tan(\gamma + \beta) \times L_0 + x$$

where x is the x Cartesian coordinate of point M.

The radius of the illuminated area $r_0$ can be modified by changing the variables h, $\theta$, and R, for a given $L_0$.

Figure 3(b) shows the geometry of Figure 3(a) adapted to design an optical element whose second surface is less curved, by increasing the radius R' which defines a cross section of the second surface 120, which is preferably a semi-hemisphere. The height h of the optical element, the angle $\theta$, the light source 10, and the fixed distance $L_0$ from the second surface 120 of the optical element to the target area, are all the same as in Figure 3(b).

The larger radius R' with a fixed height h, angle $\theta$, light source 10 and distance $L_0$ results in a larger distance L' of the light source 10 along the z-axis from the origin of the Cartesian coordinates system, a larger angle of incidence $\alpha'$, a larger angle of refraction $\beta'$, a smaller angle $\gamma'$, and a larger radius of the illuminated area $r_0'$, as can be seen in Figure 3(b).

Figure 4 shows a schematic of optical radiation passing through an optical element 105 according to the invention. The light source 10, preferably a point light source, is positioned at the centre of the first (input) surface 110.

Optical radiation 150 that is emitted from the light source 10 along the optical axis of the optical element 105 is not refracted at the second surface 120, and travels to the centre of the target area 145.

Optical radiation 155 that is emitted from the light source 10 at an angle $\theta$ to the optical axis of the optical element 105 is incident on the edge of the second surface 120, at point M, and is refracted towards the edge of the target area 145. This optical radiation 155 is incident on the target area 145 at a distance $r_0$ to the centre of the target area 145.

As before, the angle $\phi$ is the largest angle to the optical axis of the optical element 105 for which optical radiation 160 that is emitted from the light source 10 is reflected from the totally internally reflecting profile side structure 115. The optical radiation 160 is totally internally reflected towards the second surface 120. This optical radiation 160 is refracted at the second surface 120 and is incident on the target area 145 at the centre of the target area 145. Any radiation emitted from the light source 10 at an angle greater than the angle $\phi$ from the optical axis of the optical element 105 and is subsequently incident on the side wall structure is simply refracted out of the optical element 105 through the side structure 115.

Optical radiation 165 (i.e. a first portion of the optical radiation) that is emitted from the light source 10 at an angle between 0 and $\pm\theta$ to the optical axis of the optical element 105 is directly incident (i.e. without previously being incident on the side structure 115) on the second surface 120 between the centre of the second surface 120 and the point M, and is refracted towards a point between the centre and the edge of the target area 145. This optical radiation 165 is incident on the target area 145 at a distance between 0 and $\pm r_0$ to the centre of the target area 145.

Optical radiation 170 (i.e. a second portion of the optical radiation) that is emitted from the light source 10 at an angle $\theta_1$ between $\theta$ and $\phi$ (or between $-\theta$ and $-\phi$) to the optical axis of the optical element 105 is incident on the side structure 115 at a point M1. The optical radiation 170 is incident on, and totally internally reflected from, the side structure 115 at an angle $\delta$ to the normal of the side structure 115 at point M1. The angle $\delta$ should be greater than or equal to the critical angle of the side structure 115 to achieve total internal reflection. This optical radiation 170 is then incident on the second surface 120 at a point between the centre of the second surface 120 and the point M, and at an angle $\varepsilon$ to the normal at that point. This optical radiation 170 is refracted from the second surface 120 at an angle $\mu$, and is incident on the target area 145 at a radius of $r_1$, between the centre of the target area 145 and the edge of the target area 145.

In moving from point M to point M1, the angle of the side structure 115 (e.g. the tangent to the side structure 115) relative to the optical axis of the optical element 105 has increased.

Figure 5 shows the division of the second portion of optical radiation into N divisions in another embodiment, that is similar to that of Figure 4 but in which the first surface 110 is in the form of a concave semi-hemisphere 112. The light source 10, preferably a point light source, is positioned at the centre of the semi-hemisphere 112 of the first surface 110.

Optical radiation 150 that is emitted from the light source 10 along the optical axis of the optical element 105 is not refracted at the second surface 120, and travels to the centre of the target area 145, point $r_5$.

Optical radiation 155 that is emitted from the light source 10 at an angle $\theta$ to the optical axis of the optical element 105 is incident on the edge of the second surface 120, at point M, and is refracted towards the edge of the target area 145. This optical radiation 155 is incident on the edge of the target area 145 at a point $r_0$.

The illumination of the target area 145 by the first portion of the optical radiation passing through the optical element 105 is calculated. The solid angle $\Omega_1$ of the first portion of the optical radiation can be calculated by the equation:

$$\Omega_1 = 2\pi(1 - \cos\theta)$$

The luminous flux of the first portion of the optical radiation can be calculated assuming an isotropic luminous intensity $I_v$ from a point source by the equation:

$$\Phi_\theta = \int I_v \, d\Omega_1$$

The illuminance E of the first portion of the optical radiation can be found by the equation:

$$E_\theta = \frac{d\Phi_\theta}{dA}$$

Optical radiation 160 that is emitted from the light source 10 at the angle $\phi$ is incident on the side structure 115. The optical radiation 160 is totally internally reflected from the side structure 115 towards the second surface 120. This optical radiation 160 is then refracted at the second surface 120 and is then incident on the target area 145 at the centre of the target area 145 at a point $r_5$.

The illumination of the target area 145 by the second portion of the optical radiation passing through the optical element 105 is calculated. The solid angle $\Omega_{\theta-\varphi}$ of the second portion of the optical radiation can be calculated by the equation:

$$\Omega_{\theta-\phi} = 2\pi(1 - \cos\phi) - 2\pi(1 - \cos\theta) = 2\pi(\cos\theta - \cos\phi)$$

The luminous flux of the second portion of the optical radiation can be calculated assuming an isotropic luminous intensity $I_v$ from a point source by the equation:

$$\Phi_{\theta-\varphi} = \int I_v \, d\Omega_{\theta-\varphi}$$

The illuminance E of the second portion of the optical radiation can be found by the equation:

$$E_{\theta-\varphi} = \frac{d\Phi_{\theta-\varphi}}{dA}$$

Optical radiation 170 that is emitted from the light source 10 at an angle between $\theta$ and $\phi$ to the optical axis of the optical element 105 is divided into angular divisions, preferably equally sized angular divisions, which in this embodiment is 5 divisions, $\theta1$, $\theta2$, $\theta3$, $\theta4$, and $\theta5$, but the invention is not limited to any particular number of divisions and the number of divisions could be, for example, in the hundreds. Optical radiation emitted from the light source 10 at angles $\theta1$, $\theta2$, $\theta3$, $\theta4$, and $\theta5$ are incident on the side structure 115 at points M1, M2, M3, M4 and M5, respectively. This optical radiation emitted from the light source 10 at angles $\theta1$, $\theta2$, $\theta3$, $\theta4$, and $\theta5$ is totally internally reflected from the side structure 115 at points M1, M2, M3, M4 and M5, respectively, and subsequently refracted at different points on the second surface 120 towards the target area 145. This optical radiation emitted from the light source 10 at angles $\theta1$, $\theta2$, $\theta3$, $\theta4$, and $\theta5$ should be incident on the target area 145 at desired points r1, r2, r3, r4, and r5, respectively. The larger the angle of emission of optical radiation from the light source 10 between $\theta$ and $\phi$ to the optical axis of the optical element, the further from point M the optical radiation will be incident on the side structure 115 will be. Furthermore, the totally internally reflected optical radiation will be incident closer to the centre of the second surface 120, and the refracted optical radiation will be closer to the centre of the target area 145.

Desired points r1, r2, r3, r4, and r5 can be found by first calculating the total optical radiation flux between angles $\theta$ and $\phi$. This can be done using the equation:

$$\Omega_{\theta-\phi} = 2\pi(1 - \cos\phi) - 2\pi(1 - \cos\theta) = 2\pi(\cos\theta - \cos\phi)$$

where $\Omega_{\theta-\phi}$ is the solid angle between angles $\theta$ and $\phi$. There is a direct relationship between the amount of energy within the solid angle $\Omega_{\theta-\phi}$ for the entire target area 145 and the amount of the energy in the solid angle $\Omega_{\theta-\theta1}$ for the specific target area $\pi(r0^2 - r1^2)$. The relationship is defined by the equation:

$$\frac{\pi(r0^2 - r1^2)}{\pi r0^2} = \frac{\Omega_{\theta-\theta1}}{\Omega_{\theta-\phi}}$$

The second surface 120 and the side structure 115 both modify the distribution of optical radiation emitted from the optical element 105. The second surface 120 and the side structure 115 are designed separately, providing 2 degrees of freedom in the design of the optical element 105. In this way, the side structure 115 can be designed so that the intensity profile of second portion of the optical radiation (i.e. that is internally reflected from the side structure) received at the target area compliments the intensity profile of the first portion of the optical radiation (i.e. that passes directly through the optical element from the first surface 110 to the second surface 120 without being incident on the side structure 115) received at the target area in order to provide a substantially uniform total intensity profile at the target area.

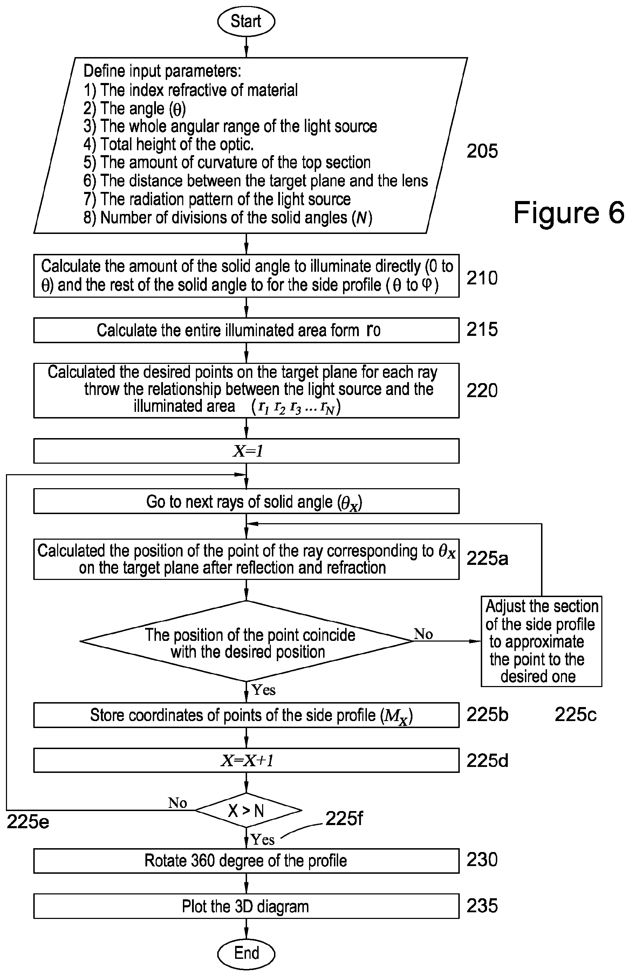

Figure 6 shows a method of generating an optical element, such as those of Figures 4 and 5. The method is in two parts. Firstly, the basic input parameters required to generate the geometry of the optical element are selected, e.g. based on application design parameters, application requirements, on previous models, on the judgement of the designer and/or the like, and the mathematical relationship between the parameters is defined. In the second part of the method, the geometry of the side structure 115, i.e. the side profile of the optical element 105, is modified in order to improve the uniformity of the light distribution in the target area. The selection of the particular basic input parameters is not essential to the process, as the second part takes into account the effects of the input parameters in the design of the side structure in order to achieve a substantially uniform light intensity distribution in the target area. Uniformity of illumination can be achieved by keeping the profile of the second surface 120 constant while changing the curvature of the side structure to improve the uniformity of the light distribution in the target area.

First, input parameters are defined 205. In this example, eight variables are used to create the dielectric totally internally reflecting (DTIR) optical element 105, these are:

1) The refractive index n of the material of the optical element 105.

2) The angle $\theta$, which is the angle, relative to the optical axis of the optical element 105, of optical radiation emitted by the light source 10 that is incident on the edge of the second surface 120 of the optical element 105, i.e. the angle relative to the optical axis of an imaginary line from the light source 10 (or the point where the optical radiation enters the optical element 105) to the junction of the second surface 120 and the side structure 115. It will be appreciated that radiation emitted in the angular range 0 to $\pm\theta$ is directly incident on the second surface 120 without being reflected by the side structure.

3) The whole angular range of the light source 10, the angular range through which the light source 10 emits optical radiation, in this example the angular range is described by an angular range of 0 to $\pm\phi$, where $\phi$ is the maximum emission angle with respect to the optical axis of the optical radiation emitted from the light source 10 for which optical radiation reaches the second surface 120, either directly or by reflection from the side structure 115. It will be appreciated that optical radiation emitted in the angular range from $\theta$ to $\phi$ and from $-\theta$ to $-\phi$ reaches the side structure 115, whereupon it is internally reflected to the second surface 120.

4) The total height h of the optical element 105, i.e. the total length of the optical element 105 along the optical axis of the optical element 105. The height h is the distance between the highest or outwardmost point of the second surface 120 of the optical element 105 and the lowest or outwardmost point of the first surface 105 of the optical element 105. Increasing the height h of the optical element 105 increases the collimation of the optical element 105, all other parameters being kept the same.

5) The amount of curvature of the second surface 120, preferably a semi-hemisphere, preferably defined by a radius R. A cross sectional profile of the second surface is defined generally by the height h, the angle $\theta$ and the radius R.

6) The distance $L_0$ between the optical element 105 and the target area 145.

7) The distribution of optical radiation emitted by the light source 10, i.e. how it spreads out from the light source. For example, the radiation pattern of an LED can tend to be Lambertian. However, in the present example, the light source is taken to be an isotropic point light source, at least in the optical range 0 to $\pm\phi$.

8) The number N of divisions of the optical radiation emitted from the light source 10 at angles relative to the optical axis of the optical element 105 in the angular range from $\theta$ to $\phi$. This number N matches the number of calculated points on the target plane for rays of optical radiation emitted at the corresponding angles for each division N.

Next, the distribution of the first portion 165 of the optical radiation on the target area 145 is calculated 210. This is the intensity of the illumination across the target area 145 due to the first portion 165 of the optical radiation that passes through the optical element 105 directly from the first surface 110 to the second surface 120. This involves calculating the solid angle from 0 to $\pm\theta$, wherein any radiation emitted by the light source within this solid angle 0 to $\pm\theta$ is directly incident on the second surface 120.

Next, the radius $r_0$ of illumination of the target area is calculated 215. This is the radius of the area of the target area 145 that is illuminated by the first portion 165 of the optical radiation that passes through the optical element 105.

As detailed above, the radius of the illuminated area ($r_0$) can be determined from the equation $r_0 = tan(\gamma + \beta) \times Lo + x$, where angle $\gamma$ is the angle at the origin of the Cartesian coordinates system between the z-axis and the point $M$, the angle $\beta$ is the angle between the ray of optical radiation refracted out of the second surface 120 of the optical element 105 at the point $M$ and the normal vector at the point $M$, $Lo$ is the distance between the light source and the target plane and $x$ is the x Cartesian coordinate of the point $M$. It will be appreciated that the radius of the illuminated area ($r_0$) can be selected by selecting appropriate values of $h$, $\theta$ and $R$ for a given $Lo$.

Next, the desired positions r1, r2, r3... $r_N$ on the target area to which the divisions of the second portion 170 of the optical radiation that passes through the optical element 105 should be redirected are calculated 220. The angular range from $\theta$ to $\phi$ is divided up into a number N of equal sections $\theta_1, \theta_2, \theta_3,..., \theta_N$. To create uniformity, it is necessary to divide the illuminated area based on energy flux within the corresponding solid angle. As detailed above, this allows each point ri = r1, r2, r3... $r_N$ in the target area to be determined from the equations: $$\frac{\pi(r0^2 - ri^2)}{\pi r0^2} = \frac{\Omega_{\theta-\theta i}}{\Omega_{\theta-\phi}}$$, where $\Omega_{j-k}$ is the light flux in the angular range j-k. The desired positions r1, r2, r3... $r_N$ on the target area are those that result in the intensity profile in the target area due to optical radiation that has been reflected from the side structure 115 complementing that of the intensity profile in the target area due to optical radiation that has passed directly from the first surface 110 to the second 120 surface without being reflected from the side structure 115.

Next, the side structure 115 is designed point-by-point 225. The point at which optical radiation passing through the optical element 105 at an angle $\theta_1$ to the optical axis of the optical element 105 is incident on the target area 145 after reflection from the side structure 115 and refraction at the second surface 120 is calculated 225a, e.g. by using ray tracing, for example by using the well-known program Zemax™, MATLAB or the like. If this incidence position coincides with the desired position r1 calculated previously, the coordinates of the point M1 on the side structure 115 are stored 225b. If this incidence position does not coincide with the desired position r1 calculated previously, the section of the side structure 115 at point M1 is adjusted to approximate this incidence position to the desired position 225c. The side structure 115 at point M1 is adjusted iteratively 225a, 225c until the incidence point and the desired position r1 coincide 225b. Once the determined incidence point and the desired position r1 coincide, the design of the side structure 115 then moves on to the next point M2 of the side structure 225d, 225e. The point M2 corresponds to optical radiation passing through the optical element 105 at an angle θ2 and a desired position r2 on the target area 145. The method repeats the process used for $\theta_1$ and r1 for each of the other angles $\theta_2, \theta_3,..., \theta_N$ and desired positions r2, r3... $r_N$. The last desired position is at the centre of the target plane and corresponds to the ray of optical radiation with angle $\phi$.

Once all points M1... $M_N$ on the side structure 115 have been determined 225f, the points M1... $M_N$ can be connected, e.g. by interpolating or curve or line fitting techniques known in the art, to form the profile of the side structure 120 of the optical element 105. The profile of the side structure is then rotated 360° (step 230) around the optical axis of the optical element 105. The resulting 3D profile of the optical element 105 is then plotted 235.

It will be appreciated that the illumination intensity in the target area $r_o$ has a contribution from both the first and second portions 165, 170 of optical radiation, wherein the first portion 165 of optical radiation is refracted out of the optical element 105 after being directly incident on the second surface 120 after being emitted in the angular range from 0 to $\pm\theta$ from the light source 10 at the first surface 110, whilst the second portion of radiation 170 reaches the second surface after being emitted in the angular range from $\theta$ to $\phi$ and from -$\theta$ to -$\phi$ by the light source 10 at the first surface 110 and being totally internally reflected from the side structure 115 to the second surface 120, and being refracted therefrom, out of the optical element 105, to the target area $r_o$. The uniformity of illumination in the target area $r_o$ is achieved by selecting the profile of the side structure 115 such that the intensity profile in the target region due to the second portion of light that is totally internally reflected from the side structure 115 compensates for, and compliments, the intensity profile in the target region due to the first portion of light that is directly incident on the second surface 120 from the first surface 110. Using the method detailed above, the illuminance distribution in the target area $r_o$ due to the first portion 165 of radiation can be calculated for a given second surface 120 profile. Thereafter, the illuminance distribution in the target area $r_o$ due to the second portion 170 of radiation that has a complimentary profile to the illuminance distribution due to the first portion of the optical radiation can be calculated, such that, the total illuminance distribution in the target area $r_o$ due to the sum of the first and second portions 165, 170 of the optical radiation is equal / uniform over substantially the entire target area $r_o$.

In systems that have an LED or point source light source 10, the profile of the side structure 120 is generally selected such that the light intensity profile in the target area $r_o$ due to the second portion 170 of the optical radiation is higher at the edges of the intensity profile than at the centre to compensate for the opposite arrangement due to the first portion 165 of the optical radiation. It will also be appreciated that, by determining the side wall profile in the point-by-point manner described above, nonuniformities in the distribution of light emitted by the light source 10 can be compensated for by the resulting profile of the side structure 115.

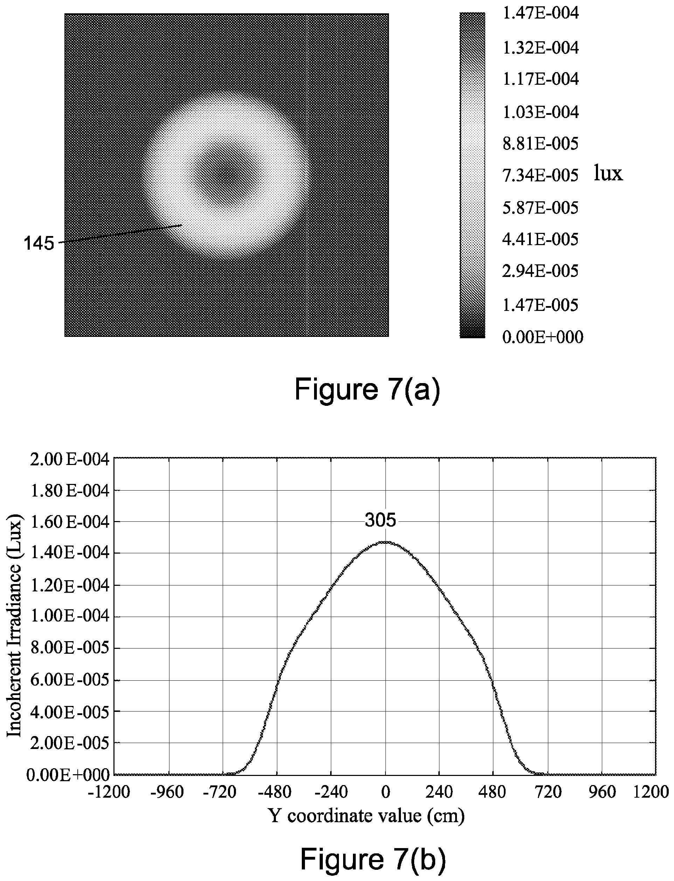

Figure 7(a) shows the 2D distribution of the first portion of optical radiation on the target area 145 when using an LED light source 10 with the optical element 105 of Figure 4. Figure 7(b) shows a slice of the distribution of the first portion of optical radiation through the centre of the target area 145 emitted from the optical element 105 of Figure 4. The first portion of the optical radiation does not uniformly illuminate the target area 145. There is more irradiance in the centre 305 of the target area 145.

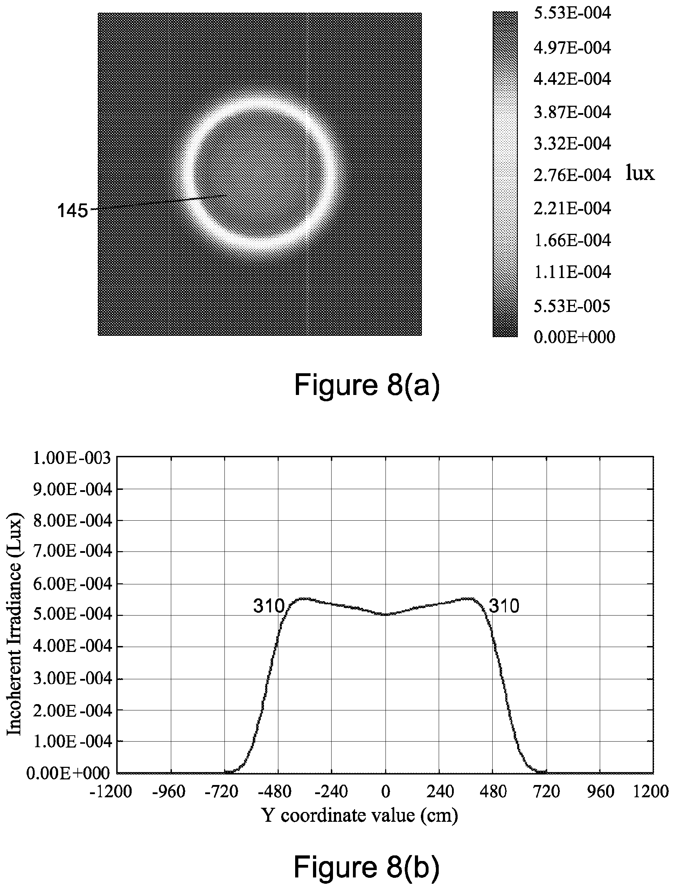

Figure 8(a) shows the 2D distribution of the second portion of optical radiation in the target area 145 when using an LED light source 10 with the optical element 105 of Figure 4. Figure 8(b) shows a slice of the distribution of the second portion of optical radiation through the centre of the target area 145 emitted from the optical element 105 of Figure 4. The second portion of the optical radiation does not uniformly illuminate the target area 145. There is more irradiance towards the edges 310 of the target area 145.

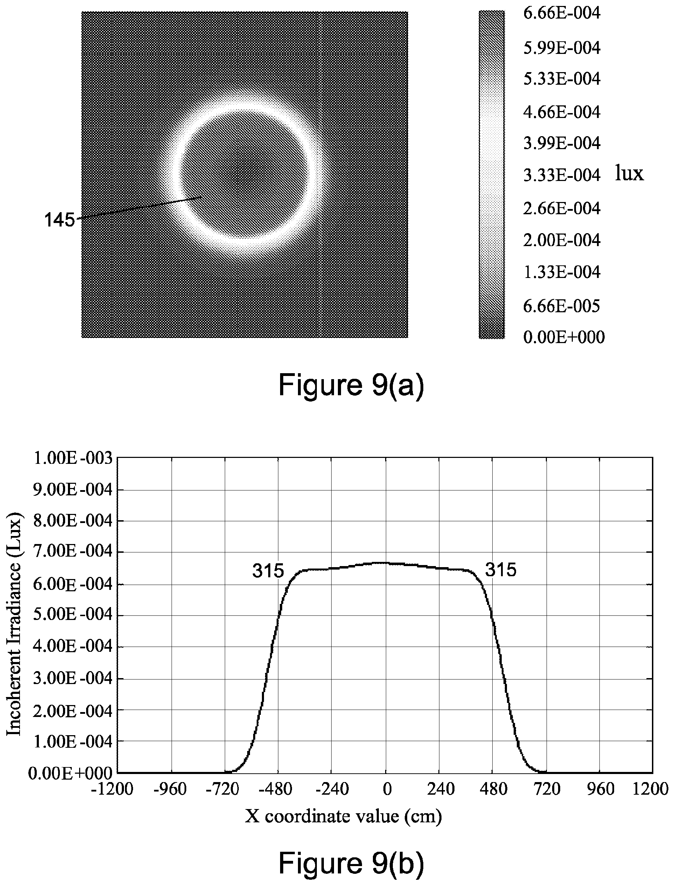

Figure 9(a) shows the combined 2D distribution of both the first and second portion of optical radiation on the target area 145 when using an LED light source 10 with the optical element 105 of Figure 4. Figure 9(b) shows a slice of the distribution of the first and second portion of optical radiation through the centre of the target area 145 emitted from the optical element 105 of Figure 4. The first and second portion of the optical radiation in combination approximately uniformly illuminate the target area 145, preferably with at least 90% and more preferably with at least 95% uniformly. The target area 145 is substantially uniformly illuminated by the combination of the first and second portions of the optical radiation emitted from the optical element 105. The irradiance drops near the edges 315 of the target area 145 from a substantially uniform irradiance across the target area 145 to no irradiance outside the target area 145.

It should also be noted that whilst the accompanying claims set out particular combinations of features described herein, the scope of the present invention is not limited to the particular combinations hereafter claimed, but instead extends to encompass any combination of features or embodiments herein disclosed irrespective of whether or not that particular combination has been specifically enumerated in the accompanying claims at this time.

Some examples of materials from which the optical element may be formed have been described. However, it will be appreciated that other substantially optically transparent materials may be used.

The optical elements described above are advantageously useable as control elements for uniform lighting in street light systems. However, it will be appreciated that the optical elements may be used for other applications that require the modification of the distribution of emission from a light source. For example, the optical element may be used to provide uniform illumination from a light source to a sample in a spectrograph, or to provide uniform irradiance/illuminance over a particular area in an optical wireless communication system. In general, it will be appreciated that the optical elements as described above may be used in any application that requires uniform illumination.

Although it is described above that an LED is provided at the input (first surface) of the optical element, it will be appreciated that any other light source may be used. Indeed, depending on the application, the source at the input need not be a point source, or even a visible light source. For example, light may be coupled into the optical element from an optical fibre. In general, it will be appreciated that the optical elements as described above may be used in combination with any source of optical radiation. It will also be appreciated that different distributions of optical radiation may be used with the optical element. The light source used with the optical element may be a point source, have a Lambertian distribution, or a different emission distribution.

It will be appreciated that some aspects or embodiments described above may be carried out on or using a suitable computer and/or processing apparatus, which may comprise a processor and/or memory.

**Claims**

1.   An illumination system comprising a light source (10) and an optical element, the optical element (105) comprising a first surface (110) being an input surface configured such that optical radiation can enter the optical element through the first surface and a second surface (120) being an output surface configured such that the optical radiation can be emitted from the optical element through the second surface, **characterised in that** the first surface and second surface being connected together by a side structure (115) and the second surface being a convex curved surface extending from a junction (M) between the second surface and the side structure,

the optical element being configured such that optical radiation passing through the optical element from the first surface to the second surface comprises a first portion of optical radiation (165) that is not incident on the side structure of the optical element, and a second portion of optical radiation (170) that is redirected by the side structure of the optical element, such that optical radiation emitted from the optical element is incident on a target area (145) and comprises the first and second portions of optical radiation, wherein
the optical element is configured such that:

the first portion of the optical radiation is emitted from the optical element through the second surface to illuminate the target area non-uniformly;
the second portion of the optical radiation is emitted from the optical element through the second surface to illuminate the target area non-uniformly; and
at least part or all of the first and second portions of optical radiation received at the target area have complementary intensity profiles such that the combination of the first and second portions of the optical radiation emitted from the optical element through the second surface illuminates the target area with at least 90% uniformity.

2.  The system of claim 1, wherein:

the first surface of the optical element is either planar or comprises a concave semi-hemispherical surface (112); and
an angle ($\theta$), at the light source or a point on the first surface that optical radiation enters the optical element, from an optical axis of the optical element to the junction (M) between the second surface and the side structure defines the outer extremes of the first portion of the optical radiation which passes through the optical element.

3.  The system of any preceding claim, wherein the totally internally reflecting profile of the side structure (115) is such that the second portion of the optical radiation passing through the optical element is totally internally reflected by a totally internally reflecting profile of the side structure to or towards the second surface of the optical element.

4.  The system of claim 1, wherein cross sectional profiles of the second surface of the optical element are a spherical section or a section of a circle or a hyperbolic or parabolic section.

5.  The system of claim 4, wherein substantially all of the optical radiation emitted from the optical element is emitted through the second surface.

6.  A method of designing, using an optics design program, an optical element (105) for use with a light source (10), the optical element comprising a first surface (110) being an input surface configured such that optical radiation can enter the optical element through the first surface and a second surface (120) being an output surface configured such that the optical radiation can be emitted from the optical element through the second surface, **characterised in that** the first surface and second surface being connected together by a side structure (115) and the second surface being a convex curved surface extending from a junction (M) between the second surface and the side structure, such that, for optical radiation passing through the optical element that comprises a first portion of optical radiation (165) that is not incident on the side structure of the optical element, and a second portion of optical radiation that is incident on, and redirected by, the side structure of the optical element, the optical radiation emitted from the optical element that is incident on a target area (145) comprises the first and second portions, the method comprising:

determining illumination of the target area by the first portion of optical radiation, and
configuring the side structure such that:

the first portion of the optical radiation is emitted from the optical element through the second surface to illuminate the target area non-uniformly;
the second portion of the optical radiation is emitted from the optical element through the second surface to illuminate the target area non-uniformly; and
at least part or all of the second portion of optical radiation received at the target area has a complementary intensity profile in the target area to the intensity profile in the target area of corresponding parts or all of the first portion of the optical radiation such that the combination of the first and second portions of the optical radiation emitted from the optical element through the second surface illuminates the target area with at least 90% uniformity.

7. The method of claim 6, wherein:

the first surface of the optical element is either planar or comprises a concave semi-hemispherical surface (112); and

an angle ($\theta$), at the light source or a point on the first surface that optical radiation enters the optical element, from an optical axis of the optical element to the junction (M) between the second surface and the side structure defines the outer extremes of the first portion of the optical radiation which passes through the optical element.

8. The method of any of claims 6 to 7, wherein the method comprises dividing the second portion of the optical radiation (170) into N divisions, determining where the optical radiation of each division should be incident on the target area in order to compliment the intensity profile of optical radiation due to the first portion, and determining the side wall structure required such that the optical radiation of each division of the second portion of the optical radiation is incident in the desired location of the target area.

9. The method of claim 8, wherein the method comprises the side structure being determined point-by-point, by considering the optical radiation of each division in turn.

10. The method of any of claims 6 to 9, comprising inputting one or more parameter of the optical element, the method comprising determining the side profile of the optical element having the one or more input parameters, wherein the input parameter is of:

the reflective index of the material from which the optical element is formed;
an angle $\theta$ at a point on the first surface from an optical axis of the optical element to a junction between the second surface and the side structure ;
a whole angular range of the light source defined by an angle $\phi$ corresponding to the outer extremes of the second portion of the optical radiation that passes through the optical element, measured from the optical axis of the optical element;
a total height of the optical element;
an amount of curvature of the second surface;
a distance between the optical element and the plane of the target area;
a radiation emission pattern of the light source; and/or
a number of divisions.

11. The method of any of claims 6 to 10, wherein the side structure is iteratively changed until the target area is substantially uniformly illuminated by the combination of the first and second portions of the optical radiation.

12. The method of claim 11 when dependent on claim 10, comprising iteratively changing the side profile, whilst maintaining the one or more of the input parameters.

13. The method of any of claims 6 to 12, wherein the method comprises determining the side structure of the optical element in 2D, and rotating the resulting structure of the optical element around the optical axis of the optical element to obtain a 3D structure.

14. A computer file, comprising a design for an optical element having the features of the optical element defined in any of claims 1 to 5 and/or created using the method of any claims 6 to 11.

**Patentansprüche**

1. Beleuchtungssystem, umfassend eine Lichtquelle (10) und ein optisches Element, wobei das optische Element (105) eine erste Oberfläche (110) als Eingangsfläche, die so konfiguriert ist, dass optische Strahlung durch die erste Oberfläche in das optische Element eintreten kann, und eine zweite Oberfläche (120) als Ausgangsfläche umfasst, die so konfiguriert ist, dass die optische Strahlung durch die zweite Oberfläche von dem optischen Element emittiert werden kann, **dadurch gekennzeichnet, dass** die erste und die zweite Oberfläche durch eine Seitenstruktur (115) miteinander verbunden sind und die zweite Oberfläche eine konvex gekrümmte Oberfläche ist, die sich von einem Übergang (M) zwischen der zweiten Oberfläche und der Seitenstruktur erstreckt,

wobei das optische Element so konfiguriert ist, dass durch das optische Element von der ersten zur zweiten Oberfläche hindurchgehende optische Strahlung einen ersten Anteil optischer Strahlung (165) umfasst, der nicht auf die Seitenstruktur des optischen Elements trifft, und einen zweiten Anteil optischer Strahlung (170), der von der Seitenstruktur des optischen Elements umgelenkt wird, sodass die vom optischen Element emittierte optische Strahlung auf einen Zielbereich (145) trifft und den ersten und zweiten Anteil optischer Strahlung umfasst,

wobei das optische Element so konfiguriert ist, dass:

der erste Anteil der optischen Strahlung vom optischen Element durch die zweite Oberfläche emittiert wird, um den Zielbereich ungleichmäßig auszuleuchten;

der zweite Anteil der optischen Strahlung vom optischen Element durch die zweite Oberfläche emittiert wird, um den Zielbereich ungleichmäßig auszuleuchten; und

mindestens ein Teil oder die Gesamtheit des ersten und zweiten Anteils der im Zielbereich empfangenen optischen Strahlung komplementäre Intensitätsprofile aufweist, sodass die Kombination des ersten und zweiten Anteils der vom optischen Element durch die zweite Oberfläche emittierten optischen Strahlung den Zielbereich mit einer Gleichmäßigkeit von mindestens 90 % ausleuchtet.

2.  System nach Anspruch 1, wobei:

die erste Oberfläche des optischen Elements entweder planar ist oder eine konkave, halbkugelförmige Oberfläche (112) umfasst; und

ein Winkel (θ) an der Lichtquelle oder an einem Punkt auf der ersten Oberfläche, an dem die optische Strahlung in das optische Element eintritt, von einer optischen Achse des optischen Elements bis zum Übergang (M) zwischen der zweiten Oberfläche und der Seitenstruktur die äußeren Grenzen des ersten Anteils der optischen Strahlung, der durch das optische Element hindurchgeht, definiert.

3.  System nach einem vorstehenden Anspruch, wobei das totalreflektierende Profil der Seitenstruktur (115) so beschaffen ist, dass der zweite Anteil der durch das optische Element hindurchgehenden optischen Strahlung durch ein totalreflektierendes Profil der Seitenstruktur zu oder in Richtung der zweiten Oberfläche des optischen Elements hin totalreflektiert wird.

4.  System nach Anspruch 1, wobei Querschnittsprofile der zweiten Oberfläche des optischen Elements ein sphärischer Schnitt oder ein Kreisschnitt oder ein hyperbolischer oder parabolischer Schnitt sind.

5.  System nach Anspruch 4, wobei im Wesentlichen die gesamte vom optischen Element emittierte optische Strahlung durch die zweite Oberfläche emittiert wird.

6.  Verfahren zum Entwerfen eines optischen Elements (105) zur Verwendung mit einer Lichtquelle (10) mittels eines Optikdesignprogramms, wobei das optische Element eine erste Oberfläche (110) als Eingangsfläche, die so konfiguriert ist, dass optische Strahlung durch die erste Oberfläche in das optische Element eintreten kann, und eine zweite Oberfläche (120) als Ausgangsfläche umfasst, die so konfiguriert ist, dass die optische Strahlung durch die zweite Oberfläche von dem optischen Element emittiert werden kann, **dadurch gekennzeichnet, dass** die erste und die zweite Oberfläche durch eine Seitenstruktur (115) miteinander verbunden sind und die zweite Oberfläche eine konvex gekrümmte Oberfläche ist, die sich von einem Übergang (M) zwischen der zweiten Oberfläche und der Seitenstruktur erstreckt, sodass für optische Strahlung, die durch das optische Element hindurchgeht, die einen ersten Anteil optischer Strahlung (165), der nicht auf die Seitenstruktur des optischen Elements trifft, und einen zweiten Anteil optischer Strahlung, der auf die Seitenstruktur des optischen Elements trifft und von dieser umgelenkt wird, umfasst, wobei die vom optischen Element emittierte und auf einen Zielbereich (145) treffende optische Strahlung den ersten und den zweiten Anteil umfasst, wobei das Verfahren umfasst:

Bestimmen einer Beleuchtung des Zielbereichs durch den ersten Anteil der optischen Strahlung und Konfigurieren der Seitenstruktur, sodass:

der erste Anteil der optischen Strahlung vom optischen Element durch die zweite Oberfläche emittiert wird, um den Zielbereich ungleichmäßig auszuleuchten;
der zweite Anteil der optischen Strahlung vom optischen Element durch die zweite Oberfläche emittiert wird, um den Zielbereich ungleichmäßig auszuleuchten; und
mindestens ein Teil oder die Gesamtheit des zweiten Anteils der im Zielbereich empfangenen optischen Strahlung ein komplementäres Intensitätsprofil im Zielbereich zu dem Intensitätsprofil im Zielbereich entsprechender Teile oder der Gesamtheit des ersten Anteils der optischen Strahlung aufweist, sodass die Kombination des ersten und zweiten Anteils der vom optischen Element durch die zweite Oberfläche emittierten optischen Strahlung den Zielbereich mit einer Gleichmäßigkeit von mindestens 90 % ausleuchtet.

7.  Verfahren nach Anspruch 6, wobei:

die erste Oberfläche des optischen Elements entweder planar ist oder eine konkave, halbkugelförmige Oberfläche (112) umfasst; und
ein Winkel ($\theta$) an der Lichtquelle oder an einem Punkt auf der ersten Oberfläche, an dem die optische Strahlung in das optische Element eintritt, von einer optischen Achse des optischen Elements bis zum Übergang (M) zwischen der zweiten Oberfläche und der Seitenstruktur die äußeren Grenzen des ersten Anteils der optischen Strahlung, der durch das optische Element hindurchgeht, definiert.

8.  Verfahren nach einem der Ansprüche 6 bis 7, wobei das Verfahren Unterteilen des zweiten Anteils der optischen Strahlung (170) in N Unterteilungen, Bestimmen, wo die optische Strahlung jeder Unterteilung auf den Zielbereich auftreffen soll, um das Intensitätsprofil von optischen Strahlung aufgrund des ersten Anteils zu ergänzen, und Bestimmen der erforderlichen Seitenwandstruktur, sodass die optische Strahlung jeder Unterteilung des zweiten Anteils der optischen Strahlung an der gewünschten Stelle des Zielbereichs auftrifft, umfasst.

9.  Verfahren nach Anspruch 8, wobei das Verfahren Bestimmen der Seitenstruktur Punkt für Punkt unter Berücksichtigung der optischen Strahlung der Reihe nach jeder Unterteilung umfasst.

10. Verfahren nach einem der Ansprüche 6 bis 9, umfassend Eingeben eines oder mehrerer Parameter des optischen Elements, wobei das Verfahren Bestimmen des Seitenprofils des optischen Elements, das den einen oder die mehreren Eingabeparameter aufweist, umfasst, wobei der Eingabeparameter folgende Eigenschaften aufweist:

den Brechungsindex des Materials, aus dem das optische Element gebildet ist;
einen Winkel $\theta$ an einem Punkt auf der ersten Oberfläche von einer optischen Achse des optischen Elements zu einem Übergang zwischen der zweiten Oberfläche und der Seitenstruktur;
einen ganzen Winkelbereich der Lichtquelle, der durch einen Winkel $\phi$ definiert ist, der den äußeren Grenzen des zweiten Anteils der optischen Strahlung entspricht, der durch das optische Element hindurchgeht, gemessen von der optischen Achse des optischen Elements;
eine Gesamthöhe des optischen Elements;
einen Krümmungsgrad der zweiten Oberfläche;
einen Abstand zwischen dem optischen Element und der Ebene des Zielbereichs;
ein Strahlungsemissionsmuster der Lichtquelle; und/oder
eine Anzahl von Unterteilungen.

11. Verfahren nach einem der Ansprüche 6 bis 10, wobei die Seitenstruktur iterativ verändert wird, bis der Zielbereich durch die Kombination des ersten und zweiten Anteils der optischen Strahlung im Wesentlichen gleichmäßig beleuchtet wird.

12. Verfahren nach Anspruch 11, wenn von Anspruch 10 abhängig, umfassend iteratives Ändern des Seitenprofils bei gleichzeitiger Beibehaltung des einen oder der mehreren Eingangsparameter.

13. Verfahren nach einem der Ansprüche 6 bis 12, wobei das Verfahren Bestimmen der Seitenstruktur des optischen Elements in 2D und Drehen der resultierenden Struktur des optischen Elements um die optische Achse des optischen Elements umfasst, um eine 3D-Struktur zu erhalten.

14. Computerdatei, die ein Design für ein optisches Element, das die in einem der Ansprüche 1 bis 5 definierten Merkmalen des optischen Elements aufweist, umfasst, und/oder unter Verwendung des Verfahrens nach einem der Ansprüche 6 bis 11 erstellt wird.

**Revendications**

1. Système d'éclairage comprenant une source lumineuse (10) et un élément optique, l'élément optique (105) comprenant une première surface (110) étant une surface d'entrée configurée de sorte qu'un rayonnement optique puisse entrer dans l'élément optique à travers la première surface et une seconde surface (120) étant une surface de sortie configurée de sorte que le rayonnement optique puisse être émis par l'élément optique à travers la seconde surface, **caractérisé en ce que** la première surface et la seconde surface sont reliées par une structure latérale (115) et que la seconde surface est une surface courbe convexe s'étendant à partir d'une jonction (M) entre la seconde surface et la structure latérale,

   l'élément optique étant configuré de sorte qu'un rayonnement optique le traversant de la première surface à la seconde surface comprenne une première partie de rayonnement optique (165) non incidente sur la structure latérale de l'élément optique, et une seconde partie de rayonnement optique (170) redirigée par la structure latérale de l'élément optique, de sorte qu'un rayonnement optique émis par l'élément optique soit incident sur une zone cible (145) et comprenne les première et seconde parties de rayonnement optique, dans lequel l'élément optique est configuré de sorte que :

   la première partie du rayonnement optique est émise par l'élément optique à travers la seconde surface pour éclairer la zone cible de manière non uniforme ;
   la seconde partie du rayonnement optique est émise par l'élément optique à travers la seconde surface pour éclairer la zone cible de manière non uniforme ; et
   au moins une partie ou la totalité des première et seconde parties du rayonnement optique reçues dans la zone cible présentent des profils d'intensité complémentaires de sorte que la combinaison des première et seconde parties du rayonnement optique émis par l'élément optique à travers la deuxième surface éclaire la zone cible avec une uniformité d'au moins 90 %.

2. Système selon la revendication 1, dans lequel :

   la première surface de l'élément optique est soit plane, soit constituée d'une surface semi-hémisphérique concave (112) ; et
   un angle ($\theta$), à la source lumineuse ou à un point sur la première surface où le rayonnement optique pénètre dans l'élément optique, d'un axe optique de l'élément optique à la jonction (M) entre la deuxième surface et la structure latérale définit les extrêmes extérieurs de la première partie du rayonnement optique qui traverse l'élément optique.

3. Système selon une quelconque revendication précédente, dans lequel le profil totalement réfléchissant intérieurement de la structure latérale (115) est tel que la seconde partie du rayonnement optique traversant l'élément optique soit totalement réfléchie intérieurement par un profil totalement réfléchissant intérieurement de la structure latérale à ou vers la seconde surface de l'élément optique.

4. Système selon la revendication 1, dans lequel des profils de section transversale de la seconde surface de l'élément optique sont une section sphérique ou une section de cercle ou une section hyperbolique ou parabolique.

5. Système selon la revendication 4, dans lequel la quasi-totalité du rayonnement optique émis par l'élément optique est émise à travers la seconde surface.

6. Procédé de conception, à l'aide d'un logiciel de conception optique, d'un élément optique (105) destiné à être utilisé avec une source lumineuse (10), l'élément optique comprenant une première surface (110) étant une surface d'entrée configurée de sorte qu'un rayonnement optique puisse entrer dans l'élément optique à travers la première surface et une seconde surface (120) étant une surface de sortie configurée de sorte que le rayonnement optique puisse être émis par l'élément optique à travers la seconde surface, **caractérisé en ce que** la première surface et la seconde surface sont reliées par une structure latérale (115) et que la seconde surface est une surface courbe convexe s'étendant à partir d'une jonction (M) entre la seconde surface et la structure latérale, de sorte que, pour un rayonnement optique traversant l'élément optique qui comprend une première partie de rayonnement optique (165) non incidente sur la structure latérale de l'élément optique, et une seconde partie de rayonnement optique incidente sur, et redirigée par, la structure latérale de l'élément optique, le rayonnement optique émis par l'élément optique qui est incident sur une zone cible (145), comprenne les première et seconde parties, le procédé comprenant :

17

la détermination d'un éclairage de la zone cible par la première partie du rayonnement optique, et
la configuration de la structure latérale de sorte que :

la première partie du rayonnement optique est émise par l'élément optique à travers la seconde surface pour éclairer la zone cible de manière non uniforme ;
la seconde partie du rayonnement optique est émise par l'élément optique à travers la seconde surface pour éclairer la zone cible de manière non uniforme ; et
au moins une partie ou la totalité de la seconde partie du rayonnement optique reçue dans la zone cible présente un profil d'intensité complémentaire dans la zone cible au profil d'intensité dans la zone cible des parties correspondantes ou de la totalité de la première partie du rayonnement optique, de sorte que la combinaison des première et seconde parties du rayonnement optique émis par l'élément optique à travers la seconde surface éclaire la zone cible avec une uniformité d'au moins 90 %.

7. Procédé selon la revendication 6, dans lequel :

la première surface de l'élément optique est soit plane, soit constituée d'une surface semi-hémisphérique concave (112) ; et
un angle (θ), à la source lumineuse ou à un point sur la première surface où le rayonnement optique pénètre dans l'élément optique, d'un axe optique de l'élément optique à la jonction (M) entre la deuxième surface et la structure latérale définit les extrêmes extérieurs de la première partie du rayonnement optique qui traverse l'élément optique.

8. Procédé selon l'une quelconque des revendications 6 à 7, dans lequel le procédé comprend la division de la seconde partie du rayonnement optique (170) en N divisions, la détermination de l'endroit où le rayonnement optique de chaque division doit être incident sur la zone cible afin de compléter le profil d'intensité du rayonnement optique dû à la première partie, et la détermination de la structure de paroi latérale requise de sorte que le rayonnement optique de chaque division de la seconde partie du rayonnement optique soit incident à l'emplacement souhaité de la zone cible.

9. Procédé selon la revendication 8, dans lequel le procédé comprend la détermination de la structure latérale point par point, en tenant compte tour à tour du rayonnement optique de chaque division.

10. Procédé selon l'une quelconque des revendications 6 à 9, comprenant la saisie d'un ou plusieurs paramètres de l'élément optique, le procédé comprenant la détermination du profil latéral de l'élément optique présentant le ou les paramètres saisis, le paramètre saisi étant parmi :

l'indice de réflexion du matériau dont est constitué l'élément optique ;
un angle θ en un point de la première surface, entre l'axe optique de l'élément optique et une jonction entre la seconde surface et la structure latérale ;
une plage angulaire complète de la source lumineuse définie par un angle φ correspondant aux extrémités extérieures de la seconde partie du rayonnement optique qui traverse l'élément optique, mesurée à partir de l'axe optique de l'élément optique ;
une hauteur totale de l'élément optique ;
un certain degré de courbure de la seconde surface ;
une distance entre l'élément optique et le plan de la zone cible ;
un motif d'émission de rayonnement de la source lumineuse ; et/ou
un nombre de divisions.

11. Procédé selon l'une quelconque des revendications 6 à 10, dans lequel la structure latérale est modifiée itérativement jusqu'à ce que la zone cible soit éclairée de manière sensiblement uniforme par la combinaison des première et seconde parties du rayonnement optique.

12. Procédé selon la revendication 11, lorsqu'elle dépend de la revendication 10, comprend la modification itérative du profil latéral, tout en conservant un ou plusieurs des paramètres saisis.

13. Procédé selon l'une quelconque des revendications 6 à 12, dans lequel le procédé comprend la détermination de la structure latérale de l'élément optique en 2D et la rotation de la structure résultante de l'élément optique autour de l'axe optique de l'élément optique pour obtenir une structure 3D.

**14.** Fichier informatique comprenant une conception pour un élément optique présentant les caractéristiques de l'élément optique défini selon l'une quelconque des revendications 1 à 5 et/ou créé à l'aide du procédé selon l'une quelconque des revendications 6 à 11.

Target plane

Z

5

20  Top section
of DTIRC

P1

15  Side profile of DTIRC
(Total Internal Reflection)

Refracted
ray

P2

P22

P3'

P3

X

A point light source at 10
the centre of aperture

12

# Figure 1(a)

20

5

15

25

10

# Figure 1(b)

Figure 2(a)

Figure 2(b)

r0 The radius of illuminated area

**Lo**
The distance between
the light source and
the target plane

Z

140
The refracted ray

The top section with
high curve 120

β
Point M

h

α

135 The normal vector

θ

A point light
source 10

130 Light ray inside
optic

R

## Figure 3(a)

L

γ

The centre of
the circle

X

The centre of
the circle 125

110

r0' The radius of illuminated area

**Lo**
The distance between
the light source and
the target plane

Z

The refracted ray

The top section with
low curve 120

β'
Point M

h

α'

The normal vector

θ

A point light
source 10

Light ray inside
optic

R'

## Figure 3(b)

L'

γ'

The centre of
the circle

X

110

EP 3 491 287 B1

Figure 4

Five desired points on the target plane

r0   r1   r2      r3        r4          r5        145

The refracted rays

155

105

M point with angle θ

TIR at the
side profile

160

120

M1 point with angle θ1

115

150   θ

M2 point with angle θ2

The subtracted
semi-hemispher

M3 point with angle θ3

Φ

M4 point with angle θ4

M5 point with angle θ5

112      110      X

10  A point light source at the centre of the aperture

# Figure 5

Figure 6

Start

Define input parameters:
1) The index refractive of material
2) The angle (θ)
3) The whole angular range of the light source
4) Total height of the optic.
5) The amount of curvature of the top section
6) The distance between the target plane and the lens
7) The radiation pattern of the light source
8) Number of divisions of the solid angles (N)

205

Calculate the amount of the solid angle to illuminate directly (0 to θ) and the rest of the solid angle to for the side profile ( θ to φ)

210

Calculate the entire illuminated area form r₀

215

Calculated the desired points on the target plane for each ray throw the relationship between the light source and the illuminated area   $(r_1\ r_2\ r_3 \ldots r_N)$

220

$X{=}1$

Go to next rays of solid angle $(\theta_X)$

Calculated the position of the point of the ray corresponding to $\theta_X$ on the target plane after reflection and refraction

225a

The position of the point coincide with the desired position

No → Adjust the section of the side profile to approximate the point to the desired one

Yes

Store coordinates of points of the side profile $(M_X)$

225b        225c

$X{=}X{+}1$

225d

No     X > N

225e        225f

Yes

Rotate 360 degree of the profile

230

Plot the 3D diagram

235

End

145

1.47E-004
1.32E-004
1.17E-004
1.03E-004
8.81E-005
7.34E-005  lux
5.87E-005
4.41E-005
2.94E-005
1.47E-005
0.00E+000

## Figure 7(a)

## Figure 7(b)

Figure 8(a)

Figure 8(b)

Figure 9(a)

Figure 9(b)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011076214 A